# EUROPEAN PATENT SPECIFICATION

(11) **EP 1 501 041 B1**
(45) Date of publication and mention of the grant of the patent: **04.11.2009**
(21) Application number: 04017250.4
(22) Date of filing: 21.07.2004
(51) Int. Cl.: G06F 3/033

(54) **Data input device with cursor position notification**
Dateneingabevorrichtung mit Rückmeldung über die Cursorposition
Dispositif d'entrée de données à contre-reaction de la position de curseur

(30) Priority: 24.07.2003 JP 2003279482
(43) Date of publication of application: 26.01.2005
(73) Proprietor: NEC CORPORATION, Tokyo (JP)
(72) Inventor: Fushikida, Hiroyoshi, c/o NEC Corporation, Minato-ku, Tokyo (JP)
(74) Representative: Glawe, Delfs, Moll

(56) References cited:
- EP-A- 0 713 172
- EP-A- 1 406 150
- WO-A-00/55712
- DE-A1- 19 858 647
- US-A1- 2002 024 501
- US-A1- 2002 149 561
- US-B1- 6 580 416

## Description

### [FIELD OF THE INVENTION]

The present invention relates to a technical field associated with a mobile terminal including a pointing device.

### [BACKGROUND OF THE INVENTION]

Conventionally, for example, a cellular phone as a typical mobile terminal (portable terminal) is provided with a function of allowing a user to point (instruct and select) an object displayed on a display by operating a pointing device or the like.

Furthermore, among the conventional mobile terminals having such a pointing function, a mobile terminal having an Internet browsing function is coming into wide spread use. Generally, in the mobile terminal having such a browsing function, a user can select selectable objects (objects to be pointed) on the occasion of performing the state transition from one controlled state to another state at a certain timing during operation by operating a cursor (pointer) indicated by, for example, a reverse video, special color or symbol, etc. In this case, the user, aiming at the object displayed on the display, operates a pointing device (hereinafter, referred to as "PD" in some cases) provided to such a mobile terminal so that a button on the device is pressed in one of up, down, left, right directions to move the cursor displayed on the display. Note that in the explanation hereinafter, the cursor and pointer are referred to generally as a PD cursor.

That is, a man-machine interface configurated with a PD, a display, an object displayed on the display and PD cursor provided in the conventional mobile terminal allows a user to freely select an object selectable at that point.

Moreover, in Japanese Patent Laid-open No. 2001-189792 (JP 2001-189792 A), a technique has been proposed which is intended to enhance operability of a pointer by providing a pointing device on the back side of a mobile or mobile communication device.

Additionally, in Japanese Patent Laid-open No. 2002-149312 (JP 2002-149312 A) , there has been proposed a mobile terminal, which allows a user to recognize a response, by driving a vibration actuator, without viewing a screen upon receipt of an operation input from the user.

Furthermore, in Japanese Patent Laid-open No. 10-224840, there has been proposed a technique wherein a mobile terminal includes, on the back thereof, a track ball for operation of a cursor.

US 2002/0 149 561 discloses a portable device (such as a PDA or a mobile phone) with a display and a touch screen. An operation input (e.g. dragging a file icon into a trash icon, or changing a numeric value by operating a virtual "knob") is confirmed to the user not only by sound, but also by causing vibration. The advantage is that it can be used in noisy environment such as in a street.

US 6,580,416 discloses a computer user interface with display and mouse cursor. If the pointer (cursor) is moved into an "actuator region" (e.g. a submit button, an underlined URL link on a webpage, etc.) and stays there for a predetermined time, then audio/visual/tactile feedback is provided to the user.

From WO 00/55712 a virtual input device with gesture analysis is known. Its interaction surface is projected onto a surface. The user moves his hand over the surface, while movement is detected by a camera. If the user holds his hand over a specific actuation field for some time ("clicking"), then a corresponding function is executed and the user gets haptical and acoustic feedback (vibrations at a low frequency).

EP 0 713 172 deals with a hand held PDA computer with a display and a mouse pointer. When the pointer is moved within the detection region associated with an icon, this icon is replaced with a more detailed menu box comprising further selections.

EP 1 406 150 describes a portable device (e.g. a mobile phone) with a display and a mouse pointer. It has a vibrator for providing tactile feedback to the user as the cursor is moved over the screen. Hence it is easier to position the cursor in a menu without looking at the display. The device also provides audible and visual feedback.

One of problems to be solved in the above conventional techniques is that the PD cursor whose position on the display is converted in response to user's operation on the pointing device poses difficulties to visually recognize as to whether or not the cursor is located on the object selectable at that point by the user. This problem becomes significant in case of use of a small-size mobile terminal in which a display area of a display mounted thereon is restricted, resulting in a situation, where a user cannot easily and correctly select an intended object.

Even in case of such unfavorable operability, there is a possibility that a typical user can acquire operability by continuing the use of the terminal for a certain period of time. However, there is a need to overcome inconvenience such unfavorable operability. Accordingly, a problem is to be solved according to the present invention is to overcome shortcomings pertaining to the need of the user's skill in the operation.

Furthermore, a display (display device) mounted on an electronic device such as a PC (Personal Computer) or PDA (Personal Digital Assistant) generally has a larger display area than that of a mobile terminal of a cellular phone, etc. In such a device, when a user is operating a cursor and freely moving the same, and the cursor is caused to be positioned on a selectable object, processing such as changing the shape and/or color of the cursor to be displayed is performed. This allows a user to easily identify the presence of the selectable object. That is, by performing such a control, a user can easily identify a relevant location as a selectable object on the display, even through the user doesn't usually recognize the relevant location as a selectable object. The benefit is realized because display modes associated with the relevant location is changed in response to movement of the PD cursor. Therefore, contents elaborated in various 'ways can be provided using such functionality. However, the display device of the mobile terminal in some cases is not suitable for the above-stated approach because the display size of the display device is small.

### [SUMMARY OF THE INVENTION]

The present invention has been made to solve the above-described problems. An object of the present invention is to allow a mobile terminal including a pointing device to carry out a notification to a user in such a way as to enable the user to easily and securely select an object selectable by the user.

The invention is defined by the attached independent claims which are delimited against US 2002 / 0 149 561 mentioned above.

Preferred embodiments are listed in the dependent claims.

Other features and advantages of the present invention will be apparent from the following description taken in conjunction with the accompanying drawings, in which like reference characters designate the same or similar parts throughout the figures thereof.

### [BRIEF DESCRIPTION OF THE DRAWINGS]

The above and other objects, features and advantages of the present invention will become apparent from the following detailed description when taken in conjunction with the accompanying drawings wherein:
Figs. 1A to 1C are diagrams to explain a notification function of sending a notification of a pointing position (cursor position) on a cellular phone 1 in a first embodiment;
Fig. 2 is a block diagram illustrating an example of the configuration of the cellular phone 1 to which the present invention is applicable;
Fig. 3 is a block diagram to conceptually explain a processing configuration which allows the cellular phone 1 according to a first embodiment to provide a notification function;
Fig. 4 is a flow chart showing the procedure of how the cellular phone 1 according to the first embodiment performs notification processing;
Fig. 5 is a block diagram to conceptually explain the processing configuration which allows the cellular phone 1 according to a second embodiment to provide a notification function; and
Fig. 6 is a flow chart showing the procedure of how the cellular phone 1 according to the second embodiment performs notification processing.

### [DETAILED DESCRIPTION OF THE PREFERRED EMBODIMENTS]

Preferred embodiments of the present invention will now be described in detail in accordance with the accompanying drawings.

A mobile terminal and cursor position notification method therefor according to the present invention will be explained in detail with reference to embodiments of a cellular phone as a representative mobile terminal (portable terminal) in accordance with the accompanying drawings.

### [First embodiment]

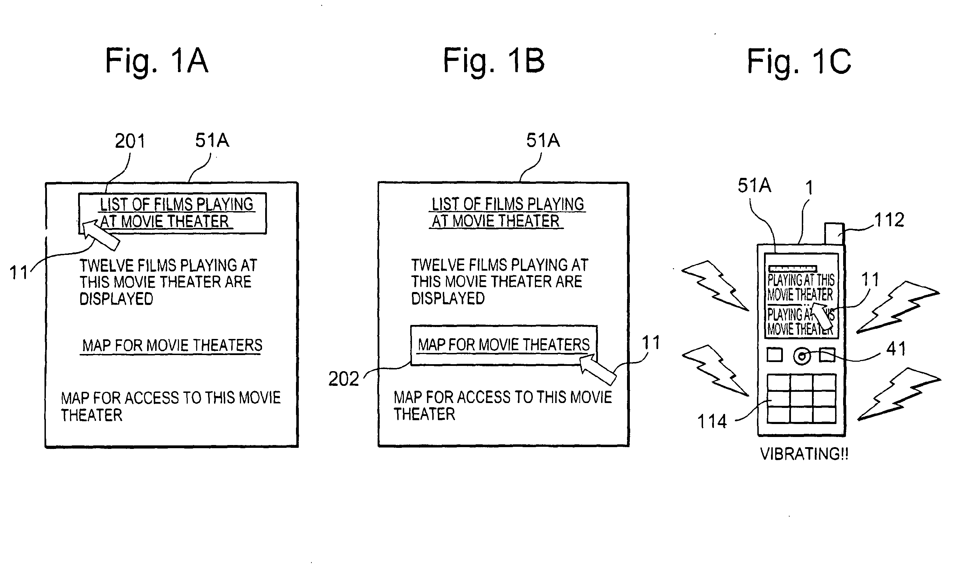

A first embodiment of the present invention will be explained with reference to Fig. 1A to Fig. 4.

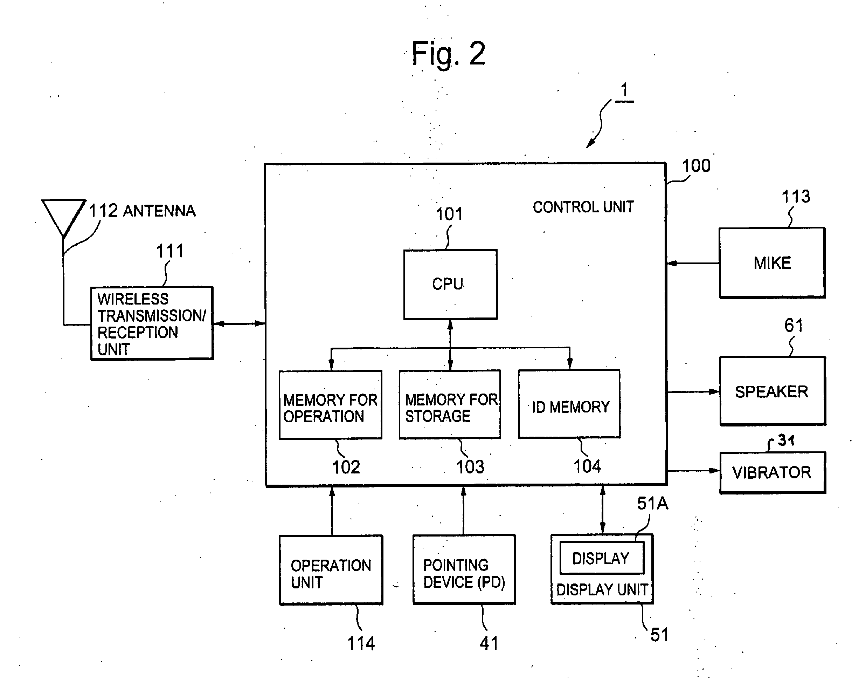

First, the exemplary configuration of the embodiment will be explained in detail below with reference to Figs. 1A to 1C and Fig. 2.

In the embodiment of the present invention, by operating a pointing device (PD) 41, a user of a cellular phone 1 can refer to the contents and menus, etc., of a browser displayed on a display 51A.

In the embodiment, a PD cursor (11) is indicated by an arrow symbol as illustrated in Fig. 1A to Fig. 1C. The PD cursor 11 represents, on the display 51A, an operation position (selected position) determined by user's operation on the PD 41. In response to the user' s operation on the PD 41, the cellular phone 1 changes the display position of the PD cursor 11. At that time, the cellular phone 1 has a function of notifying a user of existence of a selectable object 202 using a vibrator function of the cellular phone 1 in response to movement of the PD cursor 11 onto or passage thereof through a corresponding location of the selectable object 202.

Note that the term "object" means selective objects to be selected by a user on the occasion of performing the state transition from one controlled state to another state at certain timing during operation of the cellular phone 1. In general, such an object is displayed using, for example, a reverse video, special color or symbol, etc., on the display to allow the user to identify the object.

Note that in the present notification function, the cellular phone 1 is capable of carrying out notification using such a vibrator function without the need for the user to stop the PD cursor 11 on the selectable object.

That is, Figs. 1A to 1C are illustrations to explain a function of sending notification of a pointing position (cursor position) in the cellular phone 1 of the first embodiment. Figs. 1A to 1C illustrate how a display state changes in response to operation of the cellular phone 1. The contents of the present configuration will be described in detail below.

In the exemplary display screen of Fig. 1A, the PD cursor 11 is pointing to, on the display screen, an example of display characters "list of films playing at movie theater". It is assumed herein that the pointing position freely moves on the display 51A in response to the user's operation on the PD 41.

Note that in Figs. 1A and 1B, for convenience of explanation, the pointing position is represented by a rectangular frame.

Subsequently, a state shown in Fig. 1B to which the above-mentioned state of Fig. 1A is changed when the display position of the PD cursor 11 changes in response to the user's operation on the pointing device 41 will be discussed. Note that an example of display characters "MAP for movie theaters" is assumed to be an object selectable by user' s operation. In the exemplary display screen shown in Fig. 1B, the PD cursor 11 is pointing to, on the display screen, the example of display characters "MAP for movie theaters". Then, assume that the PD cursor 11 has passed by the example of display characters.

In the above sequence of operations, the cellular phone 1 notifies the user of the fact that example of display characters "MAP for movie theaters" has been pointed to as an object (202). Then, Fig. 1C illustrates a state where the cellular phone 1 is vibrating. How detailed notification is given is that the cellular phone 1 notifies the user by driving, for example, a vibrator.

The above procedure of operations allows the user to easily determine as to whether the PD cursor 11 has moved onto or passed by the object in response to the user's operation.

Here, the hardware configuration of the cellular phone 1 having the above-mentioned notification function will be explained.

Fig. 2 is a block diagram illustrating an example of the configuration of the cellular phone 1 to which the present invention is applicable.

In the embodiment, the cellular phone 1 comprises a pointing device (PD) 41, antenna 112, wireless transmission/reception unit 111, control unit 100, operation unit 114, display unit (display device) 51, microphone 113, vibrator 31, and speaker 61.

The control unit 100 includes a CPU (Central Processing Unit) 200, memory 102 for operation, memory 103 for storage; ID memory, and not shown hardware. In the control unit 100, the CPU 101 executes programs previously stored in the memory 102 for operation and then controls operation of the individual components of the cellular phone 1.

More specifically, the CPU 101 of the control unit 100 detects the user's phone number from a signal demodulated by the wireless transmission/reception unit 111 and then gives an indication of an incoming call. Further, the CPU 101 of the control unit 100 provides Internet browsing functions, sound communication through the microphone 113 and speaker 61, data communication functions such as mail transmission/reception and connection to server, etc.

Moreover, when the CPU 101 of the control unit 100 executes the programs previously stored in the memory 102 for operation, it follows an instruction input by the user through the operation unit 114 and pointing device 41.

In the embodiment, the pointing device 41 is an operation unit, operated by a user, for changing the position (coordinate value) of the PD cursor 11 to be displayed on the display 51A of the display unit 51. Furthermore, in response to user's operation, the pointing device 41 outputs a signal representing two-dimensional coordinate values (x, y). The two-dimensional coordinate values (x, y) correspond to values in a predetermined coordinate system employed in the control unit 100.

Note that in practice, the pointing device 41 would be an input device (auxiliary input device) such as a joystick, pointing stick, etc. However, the pointing device 41 is not limited to those existing input devices, but may be any device that can be operated by a user to change the position (coordinate value) of the PD cursor 11 to be displayed on the display 51A.

Moreover, the control unit 100 detects user's operation to be performed on the pointing device 41 from the signal representing the coordinate values (x, y) and simultaneously controls the position of the PD cursor 11 to be displayed on the display 51A of the display unit 51 in response to the detected operation (including operation directions and the amount of operation).

The operation unit 114 includes a key input unit (not shown) allowing a user to input information. The operation unit 114 is used to allow a user to enter a phone number upon sending a call, enter a text upon registration to an address book, and enter data to build various functions.

The display unit 51 includes the display 51A such as a liquid crystal display. In accordance with an instruction by the control unit 100, the display unit 51 displays, on the display 51A, various contents that are input to the operation unit 114 in response to user's operation. Additionally, in accordance with the instruction by the control unit 100, the display unit 51 changes the display position of the PD cursor 11 moved in response to the user's operation on the pointing device 41. At this time, when the display position of the PD cursor 11 is positioned on or has passed by the object, the display unit 51 changes display modes of the object in accordance with the instruction by the control unit 100.

The ID memory 104 stores therein a user's phone number (a call number). In the control unit 100, the CPU 101 identifies data corresponding to the demodulated signal at a certain point using the call number read from the ID memory 104.

The memory (RAM: Random Access Memory) 102 for operation is used as a memory for a work area upon operation of the CPU 101.

The memory 103 for storage is a non-volatile memory (such as Flash memory) and is for storing programs running on the CPU 101, various parameters and user data (e. g., mail documents or phone numbers), etc.

Note that in some cases, a portion of the memory 102 for operation, memory 103 for storage and ID memory 104 is realized. by dividing an area within the same physical device.

The antenna 112 transmits/receives an electrical wave whose phase is modulated and further has the same function as that of an antenna of a known wireless communication terminal.

The wireless transmission/reception unit 111 demodulates an electrical wave received from the antenna 112 and modulates the phase of a digital signal output from the control unit 100. Moreover, the wireless transmission/reception unit 111 has the same function as that of a wireless transmission/reception unit of a known wireless communication terminal.

Then, a sound of a user' s voice is input to the microphone 113. The speaker 61 outputs the sound (voice) to the user.

The vibrator 31 drives the not shown actuator in accordance with the instruction by the control unit 100 and then gives notification of an incoming call or pointing position to the user.

Note that in the embodiment, a currently prevalent technique can be employed to allow the cellular phone 1 having the aforementioned configuration to perform operations such as data transmission/reception, audio processing, and control of the display position of the PD cursor 11. Accordingly, detailed explanation thereof is omitted in the embodiment.

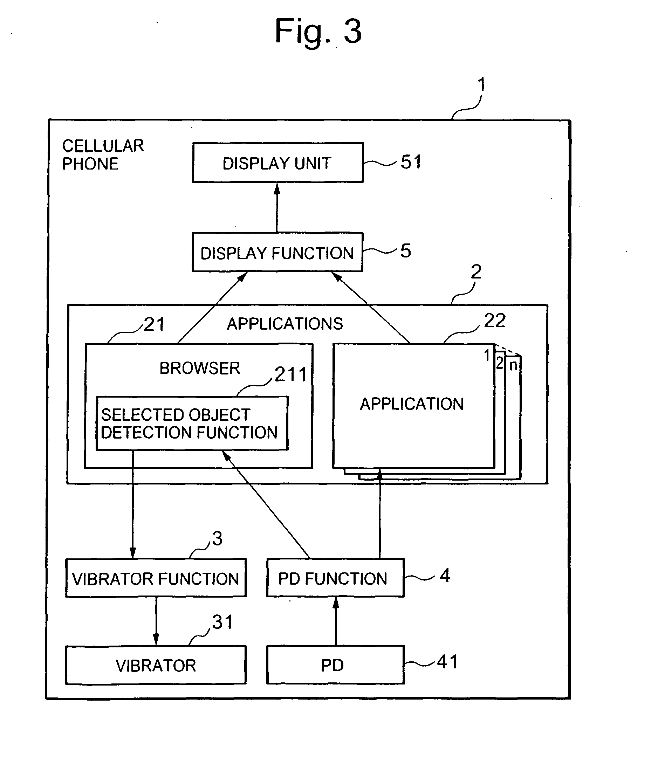

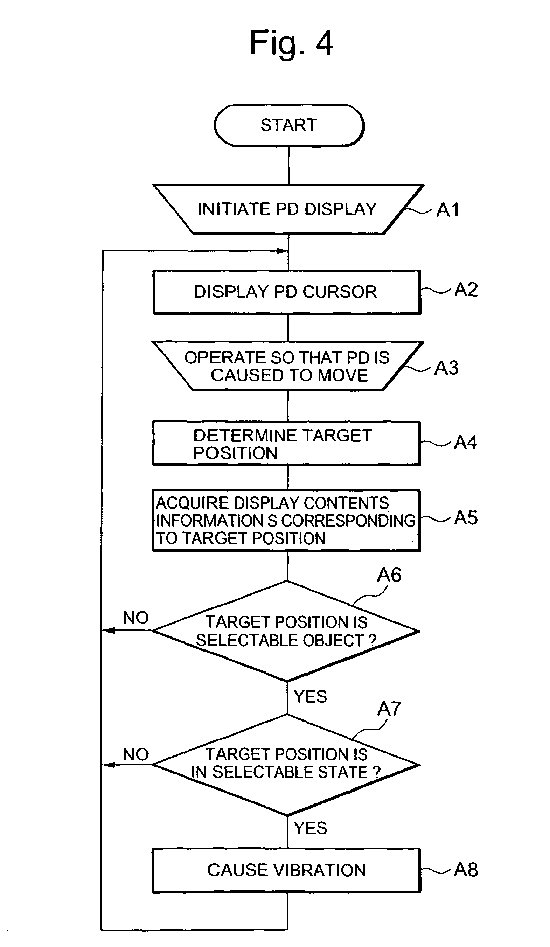

Subsequently, the configuration of how notification of the pointing position (cursor position) is advantageously performed in the cellular phone 1 according to the embodiment will be explained with reference to Fig. 3 and Fig. 4.

Fig. 3 is a block diagram to conceptually explain the unique processing configuration of the cellular phone 1 according to the embodiment. Individual functions (denoted by numerals 2 to 5) shown in the figure represent the configuration of the control program executable by the CPU 101 and running in the hardware configuration shown in Fig. 2.

In the cellular phone 1 shown in Fig. 3, a vibrator function 3 controls the operation of the vibrator 31. A PD function 4 detects a state indicating how a user operates the PD 41. A display function 5 controls the operation of the display unit 51.

That is, the PD function 4 controls display and movement of the PD cursor 11 in response to operation of the PD 41. More specifically, the PD function 4 implemented in the control unit 100 is functioned as a cursor display controller which controls a display position of the PD cursor 11 to be displayed on a display 51A in response to user's operation on the PD 41. Note that the PD cursor 11 is a pointer for displaying the pointing position, specified by user's operation on the PD 41, in a predetermined (x, y) coordinate system of the display 51A employed in the cellular phone 1.

The vibrator function 3 vibrates the cellular phone 1 by controlling operation of the vibrator 31.

The display function 5 causes the display device 51 to display the contents of applications.

Then, the entire operation of the PD function 4, vibrator function 3 and display function 51 is controlled in response to the execution of application functions 2 by the CPU 101. It is assumed that the application functions 2 have incorporated therein applications such as a browser 21 and an application 22 for referring to user's operation input through the PD 41.

The embodiment could be advantageously applied to any applications where the PD 41 mounted on the cellular phone 1 can be used.

The browser 21 includes an object detection function 211. When a user operates the PD 41 to specify a desired coordinate position (x, y) on the display 51A, the object detection function 211 acquires, from the memory 102 for operation, etc., information (hereinafter, referred to as "display contents information S") corresponding to the contents (character sequence, etc.) being displayed in the specified coordinate position (x, y). Then, the object detection function 211 determines whether or not an object being displayed in the specified coordinate position (x, y) is a selectable object. Thereafter, when the object detection function 211 determines the object corresponding to the coordinate position (x, y) is a selectable object, it instructs the vibrator function 3 to vibrate the vibrator 31.

That is, in the control unit 100, the browser 21 and the vibrator function 3 are functioned as a notification control circuit which determines a relative positional relationship between the display position of the PD cursor 11 and the display position of an object selectable by a user and notifies the user of the positional relationship by activating the vibrator 31, when it is determined that the display position of the PD cursor 11 locates within a range of predetermined distance from the display position of the object.

### (Example of operational procedure)

Fig. 4 is a flow chart showing the procedure of how the cellular phone 1 according to the first embodiment performs notification processing. The flow chart presents the procedure of how a software program executed by the CPU 101 of the control unit 100 shown in Fig. 2 performs processing. Then, an example of operation of the embodiment will be explained with reference to the figure.

The CPU 101 activates anyone of the applications (in this case, the browser 21) to display the PD cursor 11 (step A1) and then initiates execution of the PD function 4. Thereafter, based on the function provided by the PD function 4, the CPU 101 instructs the display function 5 to display the PD cursor 11. Thus, the display device 51 displays the PD cursor 11 on the display 51A (step A2).

Next, when a user operates so that the PD cursor 11 is caused to move (step A3), the CPU 101 calculates in which coordinate position on the display device 51 the PD cursor 11 is to be subsequently displayed. Based on the calculated coordinate position, the CPU 101 determines a target coordinate position (x, y) to which the PD cursor 11 is to be moved. Then, the CPU 101 transfers the target coordinate position (x, y) over to the selected object detection function 211 (step A4).

Subsequently, when the CPU 101 executes the selected object detection function 211, it acquires display contents information S being currently displayed in the target coordinate position (x, y) on the display device 51 (step A5).

Then, the CPU 101 determines whether the display contents information S acquired in step A5 is a selectable object (202) (step A6). Thereafter, when the display contents information S is a selectable object (in case of YES in step A6), the CPU 101 determines whether the object is in a selectable state (step A7) .

When the CPU 101 determines the object is in a selectable state (in case of YES in step A7) and executes the vibrator function 3, it instructs the function to vibrate the cellular phone 1. Thus, the CPU 101 is able to cause the cellular phone 1 to vibrate by performing the vibrator function 3, instructed by the CPU 101, to drive the vibrator 31 (step A8).

Thereafter, the CPU 101 returns to step A2 and instructs the PD function 4 to display the PD cursor 11 in the target coordinate position (x, y).

According to the first embodiment having the aforementioned processing configuration, when the PD 41 of the cellular phone 1 is operated and the display position of the PD cursor 11 to be displayed in response to the operation of the PD 41 coincides (overlaps) with or passes through the display position of the object (202), the CPU 101 drives the vibrator 31.

In this case, it is assumed that the expression "the display position of the PD cursor 11 and the display position of the selectable object (202) coincide with each other" means that the display position of the object has a predetermined display range in which the display position of the PD cursor 11 is included (this assumption is consistent with the description of the following embodiments and modifications).

Furthermore, it is assumed that the definition of the event where the display position of the PD cursor 11 passes through the display position of the selectable object (202) includes the event where the display position of the PD cursor 11 locates within the predetermined display range by reference to the display position of the object (this assumption is consistent with the description of the following embodiments and modifications).

According to the embodiment, a user is able to easily and securely select an object to be selected on the display 51A. That is, according to the embodiment, even when the cellular phone 1 has the display 51A with a display screen of a limited area, the operational performance of the pointing device can be improved.

### [Second embodiment]

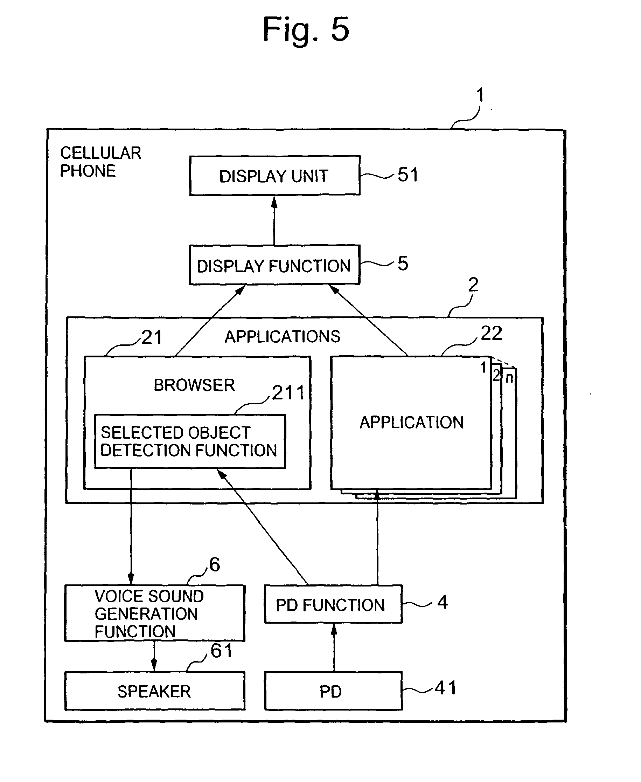

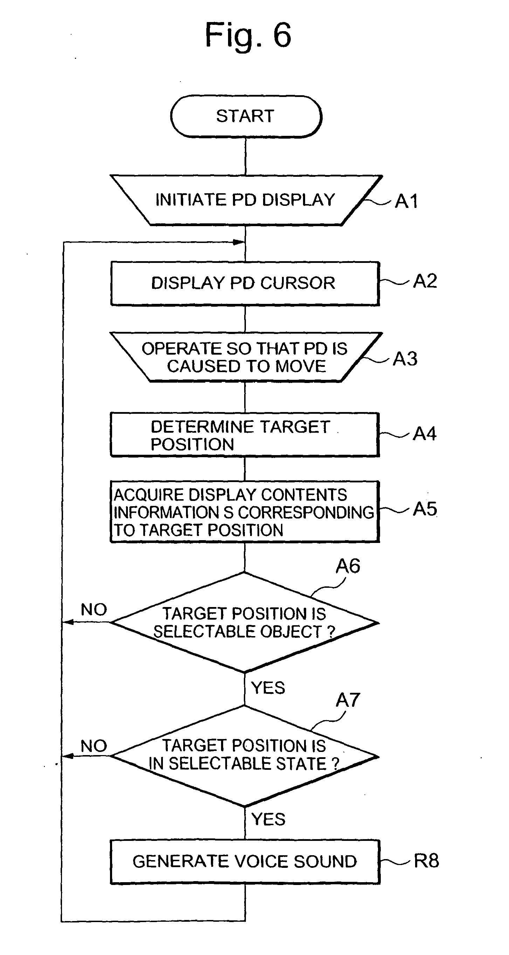

Next, a second embodiment of the present invention will be explained with reference to Fig. 5 and Fig. 6.

Fig. 5 is a block diagram to conceptually explain the processing configuration which allows the cellular phone 1 according to the embodiment to provide a notification function. Furthermore, Fig. 6 is a flow chart showing the procedure of how the cellular phone 1 according to the second embodiment performs notification processing. The flow chart represents the procedure of how a software program executed by a CPU 101 performs processing.

Note that also in the embodiment, the hardware configuration (see Fig. 2) of the cellular phone 1 is similar to that in the first embodiment.

Referring to Fig. 5 and Fig. 6, the second embodiment of the present invention is shown. The second embodiment is different than the first embodiment in that "vibrator function 3" and "vibrator 31" in the configuration diagram of Fig. 3 are replaced by "voice sound generation function 6" and "speaker 61" of Fig. 5. Furthermore, "cause cellular phone to vibrate" in step A8 in the flow chart of Fig. 4 is replaced by "generate voice sound" of Fig. 6. Operation of the second embodiment will be explained below.

Also in the embodiment, the CPU 101 performs processing similar to those indicated in the aforementioned step A1 to step A7 in a control unit 100. Note that the embodiment is different than the previous embodiment in that instead of instructing the vibrator function 3 in step A8, the voice sound generation function 6 is instructed to output a voice sound.

That is, when a user performs an operation using a PD 41 to display a PD cursor 11 (step A1), a PD function 4 instructs a display function 5 to display the PD cursor 11. This initiates the display of the PD cursor 11 on a display device 51 (step A2).

Then, when the user operates using the PD 41 so that the PD cursor 11 is caused to move (step A3), the PD function 4 calculates in which coordinate position (x, y) the PD cursor 11 is to be displayed. Furthermore, while the PD function 4 determines a target coordinate position (x, y), the PD function 4 transfers the target coordinate position (x, y) over to a selected object detection function 211 (step A4).

The selected object detection function 211 acquires display contents information S being currently displayed in the target coordinate position (x, y) on the display device 51 (step A5). Then, the selected object detection function 211 instructs the voice sound generation function 6 to emit a voice sound when the acquired display contents information S is a selectable obj ect (in case of YES in step A6) and the obj ect is in a selectable state (in case of YES in step A7).

Then, in step R8, the sound generation function 6 having received the above instruction outputs the voice sound through the speaker 61.

Thereafter, the CPU 101 returns to step A2 and instructs the PD function 4 to display the PD cursor 11 in the target coordinate position (x, y).

According to the second embodiment having the aforementioned processing configuration, when the PD 41 of the cellular phone 1 is operated and the display position of the PD cursor 11 to be displayed in response to the operation thereof coincides with (overlaps) or passes through the display position of the object (202), the CPU 101 outputs the voice sound through the speaker 61. Thus, a user is able to easily and securely select an object to be selected on the display 51A. That is, according to the embodiment, even when the cellular phone 1 has the display 51A with a display screen of a limited area, the operational performance of the pointing device can be improved.

### [Modifications of the embodiments]

### (First modification)

In the aforementioned first and second embodiments, when the display position corresponding to the selectable object coincides with (overlaps) or passes through the display position of the PD cursor 11, the notification is given to the user. Instead, in this modification, a notification is given to a user when the display position of the PD cursor 11 approaches within a range of predetermined distance from positions prior to the display position corresponding to the selectable object. That is, in this case, at a timing just before the display position of the PD cursor 11 coincides with the display position of the corresponding object, the notification is given to the user. Therefore, according to the present modification with such a configuration, notification of the fact that the selectable object is present can be given in advance to the user.

Note that since the fact that the display position of the PD cursor 11 locates within a range of predetermined distance from positions prior to the display position of the selectable object can be easily detected by calculating a coordinate position in a coordinate system (x, y) employed in the cellular phone 1 and a direction of a displacement of the coordinate position, explanation of detailed processing procedure is omitted.

Therefore, according to the present modification, a user can be prevented from carrying out an elaborate operation in which the display position of the PD cursor 11 has passed through (traveled beyond) the display position of the object to be selected and then the display position of the PD cursor 11 is returned to the display position of the corresponding object.

That is, in consideration of the aforementioned individual embodiments and this modification, it could be concluded that the cellular phone 1 has a function of detecting a relative positional relationship between the display position of the PD cursor 11 and the display position of the object selectable by a user. Moreover, it could be concluded that the cellular phone 1 has a function of notifying a user of the positional relationship therebetween by means of at least one out of modes including, vibration generation, sound output and light emission, when the cellular phone 1 determines the display position of the PD cursor 11 locates within a range of predetermined distance from the display position of the object, based on the detected relative positional relationship.

### (Second modification)

In the aforementioned first and second embodiments, the notification to the user is performed by means of vibration or sound. Instead, in this modification, the notification to the user is performed by means of vibration and sound. The above device configuration allows a user to easily and securely select an object to be selected on the display 51A.

### (Third modification)

In terms of outdoor use during night, a typical mobile terminal such as a cellular phone is designed to allow various buttons or indicators to emit light. Therefore, in this modification, a device configuration which allows operation buttons (not shown) of an operation unit 114 to emit light from behind the buttons is employed. Furthermore, when the aforementioned notification processing explained in the description of the first and second embodiments is performed in the modification, the CPU 101 controls the operation buttons of the operation unit 114 to cause the buttons to blink light, instead of causing the vibrator 31 to vibrate the phone or outputting the voice sound through the speaker 61. The above device configuration also allows a user to more easily operate the phone.

Moreover, similarly to the second modification, the aforementioned notification may be performed by an appropriate combination of vibration or sound and light emission from operation buttons.

In a more preferred embodiment, a cellular phone is designed to allow a user to select desired and at least one out of modes including, vibration generation, sound output and light emission, as a notification method in the above notification processing. Since the above device configuration allows a user to select by himself/herself an optimal technique depending on his/her own physical conditions, the cellular phone of the modification provides advantages in terms of user friendly operation and meets higher merchantability requirements.

Note that the present invention explained based on the aforementioned embodiments and their modifications can be implemented by supplying to the aforementioned cellular phone 1 a computer program for performing the functions shown in the flow chart referred in the description of the cellular phone 1 and then allowing the CPU 101 to retrieve and run the computer program. Furthermore, in this case, the computer program supplied to the corresponding device may be stored in a storage device of a read/write memory (e. g., the memory 103 for storage).

Moreover, in the previous case, a method for supplying a computer program to the corresponding device is not limited to a method for installing a computer program on the device before shipment in a production facility. For instance, currently widespread procedures such as installation of a computer program on the main body of the corresponding device through various removable recording media or download of a computer program to the main body of the corresponding device over an external communication line such as the Internet can be employed. In such a case, the present invention includes codes of the computer program or recording medium.

Therefore, according to the aforementioned individual embodiments and their modifications, first, the operational performance of the PD 41 can be improved. For instance, a user is able to easily and securely determines, on such a small screen as that of the cellular phone 1, whether or not the PD cursor 11 is present on the selectable object (202).

Second, according to the aforementioned individual embodiments and their modifications, a user is notified of presence of the selectable object by means of vibration and/or sound. That is, a user is able to identify the presence of the object without the need to clearly display the object on the display 51A by placing a line under the object or coloring the object, which operation has been performed in the conventional notification method. As a result, the freedom in a display method for a selectable object and layouts of individual display screens is enhanced, providing a greater number of ways for expression of the contents.

While this present invention has been described in connection with certain preferred embodiments, it is to be understood that the subject matter encompassed by way of this invention is not limited to those specific embodiments.

## Claims

1. A mobile terminal comprising:
cursor display means (4, 101) for controlling a display position of a cursor (11) displayed on a display (51A), wherein a user moves the cursor by operating a pointing device (41) to select an object (202) on the display; and
notification control means (3, 6, 101) for determining a relative position of the cursor relative to the object, and notifying the user by means of vibration or sound,
wherein a predetermined area includes said object (202), which object (202) can be selected by the user,
**characterized in that**
the notification control means (3, 6, 101) is adapted to notify the user, by means of vibration or sound, of said relative position when the cursor (11) is inside said predetermined area and said object (202) is not selected by the user.

2. The mobile terminal according to Claim 1, **characterized in that** said notification control means implements the notification to a user, when it is determined that the display position of the object overlaps the display position of the cursor.

3. The mobile terminal according to Claim 1 or 2, **characterized in that** said notification control means implements the notification to a user when it is determined that the display position of the cursor locates within the display position of the object having the range of predetermined distance.

4. The mobile terminal according to any one of Claims 1 to 3, **characterized in that** said notification control means implements the notification to a user when it is determined that the display position of the cursor locates within the range of predetermined distance from positions prior to the display position of the object.

5. The mobile terminal according to any one of Claims 1 to 4, **characterized in that** said notification control means includes a notification mode setting means for allowing a user to, in advance, select and set at least one of modes including vibration generation and sound output.

6. A cursor position notification method including the steps of
- determining (A2-A4) a display position of a cursor (11) to be displayed on a display (51A) in response to a user's operation of a pointing device (41) to select an object (202) on the display (51A),
- determining (A5) a relative position of the cursor (11) relative to said object (202),
- notifying the user by means of vibration or sound,
- wherein a predetermined area includes said object (202), which object (202) can be selected by the user,
**characterized by** the step of
- notifying (A8) the user, by means of vibration or sound, of said relative position when the cursor (11) is inside said predetermined area and said object (202) is not selected by the user.

7. The cursor position notification method according to Claim 6, **characterized in that,** in said notifying, the notification is implemented to a user when it is determined, in said determining of the relative positional relationship, that the display position of the object overlaps the display position of the cursor.

8. The cursor position notification method according to Claim 6 or 7, **characterized in that,** in said notifying, the notification is implemented to a user when it is determined, in said determining of the relative positional relationship, that the display position of the cursor locates within the display position of the object having the range of predetermined distance

9. The cursor position notification method according to any one of Claims 6 to 8, **characterized in that,** in said notifying, the notification is implemented to a user when it is determined, in said determining of the relative positional relationship, that the display position of the cursor locates within the range of predetermined distance from positions prior to the display position of the object.

10. A computer program for controlling operation of a mobile terminal (1) comprising a pointing device,
the computer program comprising instructions adapted to carry out, when run on a computer, the steps of claim 6.

## Patentansprüche

1. Ein mobiles Endgerät mit:
Cursor-Anzeigemitteln (4, 101) zum Steuern einer Anzeigeposition eines Cursors (11), der auf einem Display (51A) angezeigt wird, wobei ein Benutzer den Cursor durch Betätigen eines Zeigergerätes (41) bewegt, um ein Objekt (202) auf dem Display zu wählen; und
Rückmeldungsteuermitteln (3, 6, 101) zum Bestimmen einer relativen Position des Cursors relativ zu dem Objekt und Rückmelden mittels einer Vibration oder eines Tons an den Benutzer,
wobei eine vorbestimmte Fläche das Objekt (202) enthält, das durch den Benutzer gewählt werden kann,
**dadurch gekennzeichnet, dass**
die Rückmeldungsteuermittel (3, 6, 101) so ausgebildet sind, dass sie dem Benutzer mittels Vibration oder Ton die relative Position rückmelden können, wenn der Cursor (11) innerhalb der vorbestimmten Fläche ist und das Objekt (202) durch den Benutzer nicht gewählt ist.

2. Mobiles Endgerät nach Anspruch 1, **dadurch gekennzeichnet, dass** die Rückmeldungsteuermittel die Rückmeldung für einen Benutzer implementieren, wenn bestimmt wird, dass die Anzeigeposition des Objektes die Anzeigeposition des Cursors überlappt.

3. Mobiles Endgerät nach Anspruch 1 oder 2, **dadurch gekennzeichnet, dass** die Rückmeldungsteuermittel die Rückmeldung an einen Benutzer implementieren, wenn bestimmt wird, dass die Anzeigeposition des Cursors innerhalb der Anzeigeposition des Objektes, welches einen Bereich des vorbestimmten Abstandes hat, liegt.

4. Mobiles Endgerät nach einem der Ansprüche 1-3, **dadurch gekennzeichnet, dass** die Rückmeldungsteuermittel die Rückmeldung für einen Benutzer implementieren, wenn bestimmt wird, dass die Anzeigeposition des Cursors innerhalb des Bereiches des vorbestimmten Abstandes zu Positionen vor der Anzeigeposition des Objektes liegt.

5. Mobiles Endgerät nach einem der Ansprüche 1-4, **dadurch gekennzeichnet, dass** die Rückmeldungsteuermittel ein Rückmeldungsmoduseinstellmittel aufweisen, um dem Benutzer zu ermöglichen, dass er im Voraus wenigstens einen der Modi, welche die Vibrationserzeugung und den Tonausgang umfassen, wählt und einstellt.

6. Cursorpositionsrückmeldungsverfahren mit den Schritten
- Bestimmen (A2-A4) einer Anzeigeposition eines Cursors (11), der auf einem Display (51A) anzuzeigen ist, in Antwort auf eine Betätigung eines Anzeigegerätes (41) durch einen Benutzer, um ein Objekt (202) auf dem Display (51A) zu wählen,
- Bestimmen (A5) einer relativen Position des Cursors (11) relativ zu dem Objekt (202),
- Rückmelden an den Benutzer mittels Vibration oder Ton,
- wobei die vorbestimmte Fläche das Objekt (202) enthält, wobei dieses Objekt (202) durch den Benutzer gewählt werden kann,
**gekennzeichnet durch** den Schritt
- Rückmelden (A8) der relativen Position an den Benutzer mittels Vibration oder Ton, wenn der Cursor (11) innerhalb der vorbestimmten Fläche ist und das Objekt (202) nicht **durch** den Benutzer gewählt ist.

7. Cursorpositionsrückmeldungsverfahren nach Anspruch 6, **dadurch gekennzeichnet, dass** bei der Rückmeldung die Rückmeldung an einen Benutzer implementiert wird, wenn bestimmt wird, dass bei der Bestimmung der relativen Positionsbeziehung die Anzeigeposition des Objektes die Anzeigeposition des Cursors überlappt.

8. Cursorpositionsrückmeldungsverfahren nach Anspruch 6 oder 7, **dadurch gekennzeichnet, dass** bei der Rückmeldung die Rückmeldung an einen Benutzer implementiert wird, wenn bestimmt wird, dass bei der Bestimmung der relativen Positionsbeziehung die Anzeigeposition des Cursors innerhalb der Anzeigeposition des Objektes mit dem Bereich des vorbestimmten Abstandes liegt.

9. Cursorpositionsrückmeldungsverfahren nach einem der Ansprüche 6-8, **dadurch gekennzeichnet, dass** bei der Rückmeldung die Rückmeldung an einen Benutzer implementiert wird, wenn bestimmt wird, dass bei der Bestimmung der relativen Positionsbeziehung die Anzeigeposition des Cursors innerhalb des Bereiches eines vorbestimmten Abstandes zu den Positionen vor der Anzeigeposition des Objektes liegt.

10. Computerprogramm zur Steuerung der Funktionsweise eines mobilen Endgerätes (1) mit einem Zeigergerät,
wobei das Computerprogramm Instruktionen enthält, die bei Laufen auf einem Computer die Schritte gemäß Anspruch 6 ausführen können.

## Revendications

1. Terminal mobile comprenant :
des moyens d'affichage de curseur (4, 101) pour commander une position d'affichage d'un curseur (11) affiché sur une unité d'affichage (51A), dans lequel un utilisateur déplace le curseur en actionnant un dispositif de pointage (41) pour sélectionner un objet (202) sur l'unité d'affichage ; et
des moyens de commande de notification (3, 6, 101) pour déterminer une position relative du curseur par rapport à l'objet, et pour informer l'utilisateur au moyen d'une vibration ou d'un son,
dans lequel une zone prédéterminée comprend ledit objet (202), lequel objet (202) peut être sélectionné par l'utilisateur,
**caractérisé en ce que**
les moyens de commande de notification (3, 6, 101) sont adaptés pour informer l'utilisateur, au moyen d'une vibration ou d'un son, de ladite position relative lorsque le curseur (11) est à l'intérieur de ladite zone prédéterminée et que ledit objet (202) n'est pas sélectionné par l'utilisateur.

2. Terminal mobile selon la revendication 1, **caractérisé en ce que** lesdits moyens de commande de notification effectuent la notification à un utilisateur lorsqu'il est déterminé que la position d'affichage de l'objet recouvre la position d'affichage du curseur.

3. Terminal mobile selon la revendication 1 ou 2, **caractérisé en ce que** lesdits moyens de commande de notification effectuent la notification à un utilisateur lorsqu'il est déterminé que la position d'affichage du curseur se trouve dans les limites de la position d'affichage de l'objet ayant la plage de distance prédéterminée.

4. Terminal mobile selon l'une quelconque des revendications 1 à 3, **caractérisé en ce que** lesdits moyens de commande de notification effectuent la notification à un utilisateur lorsqu'il est déterminé que la position d'affichage du curseur se trouve dans les limites de la plage de distance prédéterminée par rapport à des positions avant la position d'affichage de l'objet.

5. Terminal mobile selon l'une quelconque des revendications 1 à 4, **caractérisé en ce que** lesdits moyens de commande de notification comprennent des moyens de détermination de mode de notification pour permettre à un utilisateur de sélectionner et de fixer à l'avance au moins l'un des modes comprenant une génération de vibrations et une sortie de son.

6. Procédé de notification de position de curseur comprenant les étapes consistant à :
- déterminer (A2 à A4) une position d'affichage d'un curseur (11) à afficher sur une unité d'affichage (51A) en réponse à un actionnement d'un dispositif de pointage (41) par l'utilisateur pour sélectionner un objet (202) sur l'unité d'affichage (51A),
- déterminer (A5) une position relative du curseur (11) par rapport audit objet (202),
- informer l'utilisateur au moyen d'une vibration ou d'un son,
- dans lequel une zone prédéterminée comprend ledit objet (202), lequel objet (202) peut être sélectionné par l'utilisateur,
**caractérisé par** l'étape consistant à :
- informer (A8) l'utilisateur, au moyen d'une vibration ou d'un son, de ladite position relative lorsque le curseur (11) est à l'intérieur de ladite zone prédéterminée et que ledit objet (202) n'est pas sélectionné par l'utilisateur.

7. Procédé de notification de position de curseur selon la revendication 6, **caractérisé en ce que**, lors de ladite notification, la notification est effectuée pour un utilisateur lorsqu'il est déterminé, lors de ladite détermination de la relation de position relative, que la position d'affichage de l'objet recouvre la position d'affichage du curseur.

8. Procédé de notification de position de curseur selon la revendication 6 ou 7, **caractérisé en ce que,** lors de ladite notification, la notification est effectuée pour un utilisateur lorsqu'il est déterminé, lors de ladite détermination de la relation de position relative, que la position d'affichage du curseur se trouve dans les limites de la position d'affichage de l'objet ayant la plage de distance prédéterminée.

9. Procédé de notification de position de curseur selon l'une quelconque des revendications 6 à 8, **caractérisé en ce que**, lors de ladite notification, la notification est effectuée pour un utilisateur lorsqu'il est déterminé, lors de ladite détermination de la relation de position relative, que la position d'affichage du curseur se trouve dans les limites de la plage de distance prédéterminée par rapport à des positions avant la position d'affichage de l'objet.

10. Programme d'ordinateur pour commander le fonctionnement d'un terminal mobile (1) comprenant un dispositif de pointage,
le programme d'ordinateur comprenant des instructions adaptées pour exécuter les étapes de la revendication 6, lors d'une exécution sur un ordinateur.
